# EUROPEAN PATENT SPECIFICATION

(11) **EP 3 199 437 B1**
(45) Date of publication and mention of the grant of the patent: **12.12.2018**
(21) Application number: 16192329.7
(22) Date of filing: 05.10.2016
(51) Int. Cl.: B62J 6/00, B62J 6/02, B62J 17/02

(54) **STRADDLED VEHICLE**
GRÄTSCHSITZFAHRZEUG
VÉHICULE À CHEVAUCHÉ

(30) Priority: 29.01.2016 JP 2016016308
(43) Date of publication of application: 02.08.2017
(73) Proprietor: Yamaha Hatsudoki Kabushiki Kaisha, Iwata-shi, Shizuoka 438-8501 (JP)
(72) Inventor: TAKAHASHI, Hiroki, Iwata-shi, Shizuoka 438-8501 (JP)
(74) Representative: Grünecker Patent- und Rechtsanwälte PartG mbB

(56) References cited:
- EP-A1- 2 163 464
- EP-A1- 2 974 949

## Description

### BACKGROUND OF THE INVENTION

### 1. Field of the Invention

The present invention relates to a straddled vehicle.

### 2. Description of the Related Art

There is a type of straddled vehicle including a front cover assembly composed of a plurality of covers. For example, a straddled vehicle described in Japan Laid-open Patent Application Publication No. 2011-79337 includes a front cover assembly composed of a front cover, a left side cover and a right side cover. Each of the front cover, the left side cover and the right side cover is provided with an opening. A headlight is disposed in the opening of the front cover, A left flasher light is disposed in the opening of the left side cover. A right flasher light is disposed in the opening of the right side cover. EP 2 974 949 A1 discloses a vehicle similar to that defined in the preamble of independent claim 1.

### SUMMARY OF THE INVENTION

When a front cover assembly is composed of a plurality of covers, detachment of each cover is easier than detachment of a front cover assembly integrally constructed. Thus, it is possible to enhance maintenance performance of a component such as an electric component disposed inside the front cover assembly.

However, when the right and left flasher lights are respectively attached to the right and left side covers as described in Japan Laid-open Patent Application Publication No. 2011-79337, each flasher light is inevitably detached together with each side cover by detaching each side cover. Therefore, it is not easy to enhance maintenance performance of components in the straddled vehicle described in Japan Laid-open Patent Application Publication No. 2011-79337 even though the front cover assembly is composed of the plural covers.

Additionally, when the front cover assembly is composed of a plurality of covers, it is important to reliably achieve stiffnesses required for joint portions among the respective covers. When the straddled vehicle is constructed such that the front cover supports the headlight while the right and left side covers respectively support the right and left flasher lights as described in Japan Laid-open Patent Application Publication No. 2011-79337, loads act on the respective covers and hence it is particularly important to reliably achieve the stiffnesses required for the joint portions among the respective covers.

Moreover, the straddled vehicle described in Japan Laid-open Patent Application Publication No. 2011-79337 is constructed such that each of the front cover, the left side cover and the right side cover is provided with the opening. Therefore, degradation in stiffness of each cover in itself is concerned.

It is an object of the present invention to enhance maintenance performance of a component disposed inside a front cover assembly in a straddled vehicle, and simultaneously, inhibit deficiency in stiffnesses of a plurality of covers composing the front cover assembly and deficiency in stiffnesses of joint portions among the covers in the straddled vehicle.

A straddled vehicle according to an aspect of the present invention includes a vehicle body frame, a front cover assembly, an inner cover, a leg shield, a left side cover and a right side cover. The vehicle body frame includes a head pipe. The front cover assembly is disposed in front of the head pipe. The inner cover is disposed under the front cover assembly. The leg shield is disposed behind the front cover assembly and the inner cover. The left side cover is provided separately from the front cover assembly. The right side cover is provided separately from the front cover assembly.

The front cover assembly includes a first cover member, a headlight, a left flasher light, a right flasher light and a second cover member. The first cover member includes a middle opening. The middle opening is located in a right-and-left directional middle of the first cover member in a vehicle front view. The first cover member is supported by the vehicle body frame. The headlight includes a headlight lens disposed in the middle opening. The headlight is supported by the first cover member. The left flasher light is supported by the first cover member. The left flasher light includes a left flasher lens. The left flasher lens is disposed leftward of the headlight lens and on a left end portion of the first cover member in the vehicle front view. The right flasher light is supported by the first cover member. The right flasher light includes a right flasher lens. The right flasher lens is disposed rightward of the headlight lens and on a right end portion of the first cover member in the vehicle front view.

The second cover member is provided separately from the first cover member, and is attached to an outer surface of the first cover member. The second cover member includes a second left cover portion and a second right cover portion. The second left cover portion at least partially overlaps with the first cover member in a region between the headlight lens and the left flasher lens in the vehicle front view. The second right cover portion at least partially overlaps with the first cover member in a region between the headlight lens and the right flasher lens in the vehicle front view.

An upper end of the left flasher lens and an upper end of the right flasher lens are located lower than an upper end of the headlight lens and higher than a lower end of the headlight lens in the vehicle front view. At least the left flasher light, the leg shield and the inner cover form a left opening opened leftward. At least the right flasher light, the leg shield and the inner cover form a right opening opened rightward. The left side cover is disposed on the left opening. The right side cover is disposed on the right opening.

In the straddled vehicle according to the present aspect, the headlight and the right and left flasher lights are supported by the first cover member. Therefore, the right and left side covers are not required to be provided with openings for attaching the right and left flasher lights. Accordingly, degradation in stiffnesses of the right and left side covers can be inhibited. Additionally, the first cover member is provided as an integrated member of covers requiring stiffnesses to support the headlight and the right and left flasher lights. Hence, stiffnesses required for the right and left side covers can be lowered. Accordingly, deficiency in stiffnesses of the right and left side covers can be inhibited.

The right and left side covers are not required to support heavy objects. Hence, it is possible to lower stiffnesses required for coupling portions at which the right and left side covers and the first cover member are coupled. Accordingly, deficiency in stiffnesses of the coupling portions can be inhibited.

The upper end of the left flasher lens and that of the right flasher lens are located lower than the upper end of the headlight lens and higher than the lower end of the headlight lens in the vehicle front view. With the construction, it becomes easy to perform maintenance of the right and left flasher lights.

However, as described above, when the headlight and the right and left flasher lights are right-and-left directionally disposed in alignment in the vehicle front view, it is required to reliably produce a large distance between the headlight and the right flasher light and a large distance between the headlight and the left flasher light so as to enhance visibility of the right and left flasher lights. Because of this, the first cover member is inevitably enlarged in a portion between the headlight and the right flasher light and a portion between the headlight and the left flasher light. As a result, when the headlight and the right and left flasher lights are supported by the first cover member provided as an integrally formed member, the first cover member is enlarged in the portion between the headlight and the right flasher light and the portion between the headlight and the left flasher light. Hence, degradation in stiffnesses of these portions of the first cover member is concerned.

However, in the straddled vehicle according to the present aspect, the second left cover portion overlaps with the portion between the headlight lens and the left flasher lens in the first cover member, whereas the second right cover portion overlaps with the portion between the headlight lens and the right flasher lens in the first cover member. With the construction, it is possible to efficiently enhance stiffness of the portion between the headlight and the right flasher light in the first cover member and that of the portion between the headlight and the left flasher light in the first cover member even when these portions are enlarged to enhance visibility of the flasher lights.

The right and left flasher lights are supported by the first cover member. Hence, the right and left side covers can be detached without detaching the right and left flasher lights. Accordingly, maintenance performance can be enhanced.

Additionally, the left flasher light composes portion of the left opening, whereas the right flasher light composes portion of the right opening. Therefore, the left flasher light is easily accessible through the left opening, whereas the right flasher light is easily accessible through the right opening. Accordingly, maintenance performance of the right and left flasher lights can be enhanced.

The left flasher light composes portion of the left opening, and the left side cover is disposed on the left opening. On the other hand, the right flasher light composes portion of the right opening, and the right side cover is disposed on the right opening. With the construction, the left flasher light and the left side cover are disposed in adjacent to each other, whereas the right flasher light and the right side cover are disposed in adjacent to each other. Therefore, even when the headlight and the right and left flasher lights are right-and-left directionally disposed in alignment in the vehicle front view, increase in width directional size of the front cover assembly can be inhibited.

The first cover member may include a recess downwardly recessed from an upper edge of the first cover member. The second cover member may include a second middle cover portion. The second middle cover portion may overlap with at least a portion located between the recess and the middle opening in the first cover member in the vehicle front view. In this case, the interior of the front cover assembly is accessible through the recess. Hence, maintenance performance can be enhanced. Additionally, even when the first cover member is provided with the recess, degradation in stiffness of the first cover member can be inhibited by the second middle cover portion.

The front cover assembly may include an upper cover. The upper cover may be provided separately from the first cover member and the second cover member, and may be disposed to cover the recess. In this case, the upper cover is designed to be attached to and detached from the front cover assembly. Hence, maintenance performance can be further enhanced.

The upper cover may include a mounter for a license plate. In this case, when the upper cover is detached from the front cover assembly, the license plate can be simultaneously detached therefrom. Accordingly, maintenance performance can be further enhanced.

A boundary between the second left cover portion and the first cover member may be located between the headlight lens and the left flasher lens in the vehicle front view. A boundary between the second right cover portion and the first cover member may be located between the headlight lens and the right flasher lens in the vehicle front view. In this case, an uneven shape is formed between the first cover member and the second left cover portion. Hence, the stiffness of the front cover assembly can be further enhanced. Likewise, an uneven shape is formed between the first cover member and the second right cover portion. Hence, the stiffness of the front cover assembly can be further enhanced.

The first cover member may be partially visible between the second left cover portion and the headlight lens in the vehicle front view. The first cover member may be partially visible between the second right cover portion and the headlight lens in the vehicle front view. In this case, an uneven shape is formed between the first cover member and the second left cover portion. Hence, the stiffness of the front cover assembly can be further enhanced. Likewise, an uneven shape is formed between the first cover member and the second right cover portion. Hence, the stiffness of the front cover assembly can be further enhanced.

The first cover member may be partially visible between the second left cover portion and the left flasher lens in the vehicle front view. The first cover member may be partially visible between the second right cover portion and the right flasher lens in the vehicle front view. In this case, an uneven shape is formed between the first cover member and the second left cover portion. Hence, the stiffness of the front cover assembly can be further enhanced. Likewise, an uneven shape is formed between the first cover member and the second right cover portion. Hence, the stiffness of the front cover assembly can be further enhanced.

The boundary between the second left cover portion and the first cover member may extend obliquely upward to rear in a vehicle side view. The boundary between the second right cover portion and the first cover member may extend obliquely upward to rear in the vehicle side view.

The straddled vehicle may further include a battery. The battery may be disposed between the front cover assembly and the head pipe. In this case, the battery is easily accessible. Hence, maintenance performance can be enhanced.

The left flasher lens, the right flasher lens and the headlight lens may be provided separately from each other. In this case, attachment/detachment works can be separately performed for the left flasher lens, the right flasher lens and the headlight lens. Hence, maintenance performance can be enhanced.

The first cover member may include a first left cover portion, a first right cover portion and a first lower cover portion. The first left cover portion may be located between the headlight lens and the left flasher lens in the vehicle front view. The first right cover portion may be located between the headlight lens and the right flasher lens in the vehicle front view. The first lower cover portion may be located under the headlight lens in the vehicle front view. A lower end portion of the first left cover portion and a lower end portion of the first right cover portion may continue to the first lower cover portion. In this case, the stiffness of the first cover member can be more enhanced than that in a construction that the first left cover portion and the first right cover portion do not continue to the first lower cover portion.

The first cover member may not include a portion located leftward of a left edge of the left flasher lens in the vehicle front view. The first cover member may not include a portion located rightward of a right edge of the right flasher lens in the vehicle front view. In this case, the width of the front cover assembly can be more narrowed than that in a construction that the first cover member includes a portion located on the right side of the right flasher lens and a portion located on the left side of the left flasher lens.

The left edge of the left flasher lens may be directly attached to the left side cover. The right edge of the right flasher lens may be directly attached to the right side cover. In this case, the width of the front cover assembly can be more narrowed than that in a construction that the right flasher lens is attached to a portion located on the right side of the right flasher lens in the first cover member whereas the left flasher lens is attached to a portion located on the left side of the left flasher lens in the first cover member.

The first cover member may not include a portion located under a lower edge of the left flasher lens in the vehicle front view. The first cover member may not include a portion located under a lower edge of the right flasher lens in the vehicle front view. In this case, the first cover member can be formed with a smaller size and the stiffness of the first cover member can be more enhanced in comparison with a construction that the first cover member includes a portion located under the lower edge of the left flasher lens and a portion located under the lower edge of the right flasher lens.

### BRIEF DESCRIPTION OF THE DRAWINGS

FIG. 1 is a perspective view of a straddled vehicle according to a preferred embodiment.
FIG. 2 is a side view of the straddled vehicle.
FIG. 3 is a top view of the straddled vehicle.
FIG. 4 is a front view of the straddled vehicle.
FIG. 5 is a perspective view of a front portion of a vehicle body cover.
FIG. 6 is a perspective view of a front cover assembly.
FIG. 7 is an exploded perspective view of the front cover assembly.
FIG. 8 is a front view of the front cover assembly.
FIG. 9 is a side view of the front cover assembly.
FIG. 10 is an oblique rear view of a first cover member, a headlight, a left flasher light and a right flasher light.
FIG. 11 is a perspective view of the first cover member.
FIG. 12 is a perspective view of a second cover member.
FIG. 13 is a perspective view of the front portion of the vehicle body cover from which an upper cover and right and left side covers are detached.
FIG. 14 is a top view of the front portion of the vehicle body cover from which the upper cover and the right and left side covers are detached.
FIG. 15 is a left side view of the front portion of the vehicle body cover from which the upper cover and the right and left side covers are detached.
FIG. 16 a right side view of the front portion of the vehicle body cover from which the upper cover and the right and left side covers are detached.
FIG. 17 is a front view of a straddled vehicle according to another preferred embodiment.

### DETAILED DESCRIPTION OF THE PREFERRED EMBODIMENTS

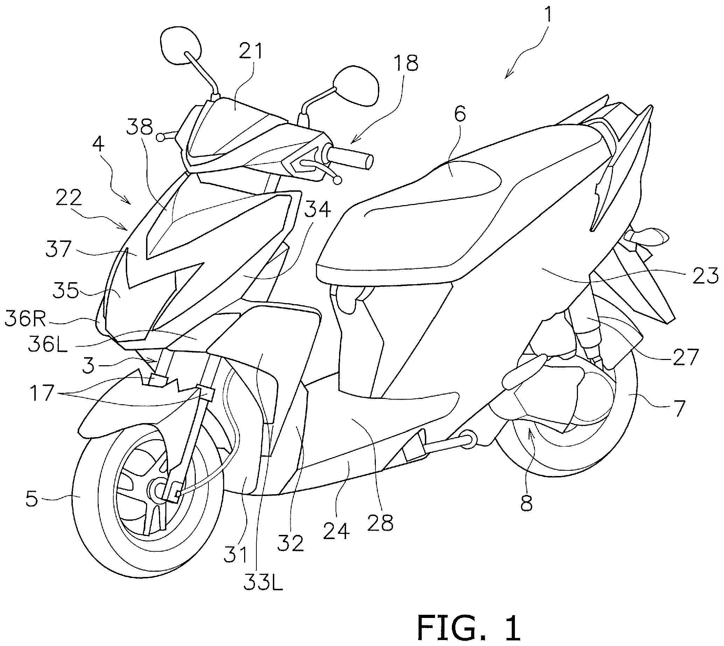

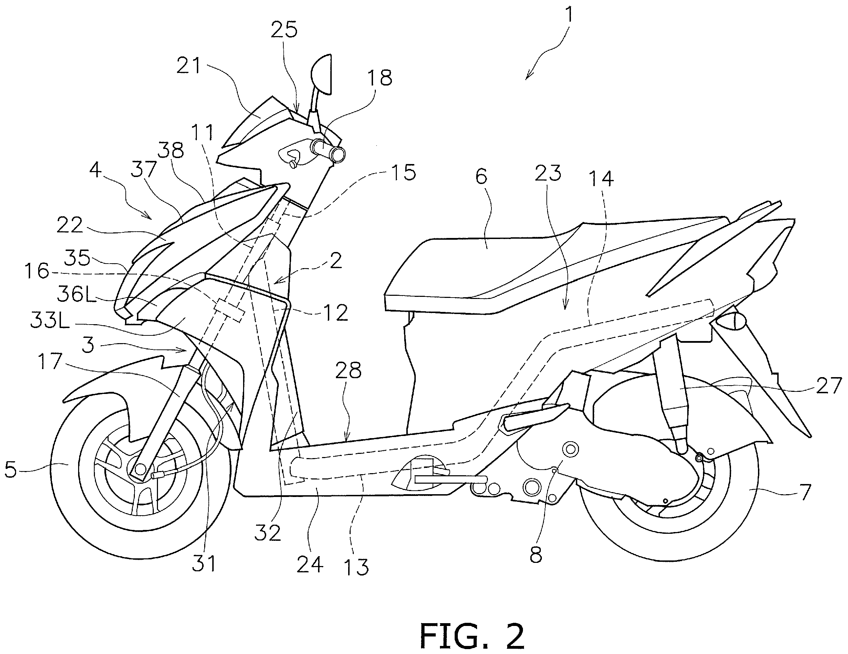

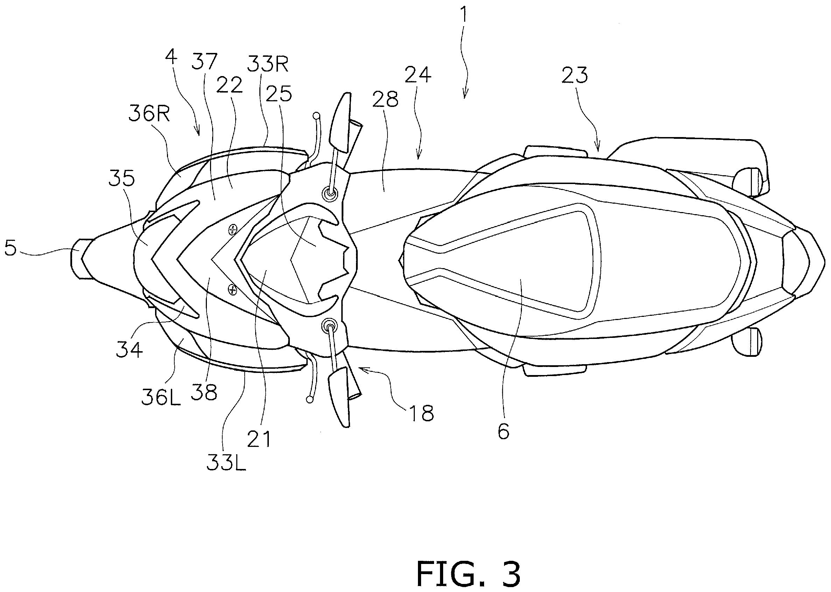

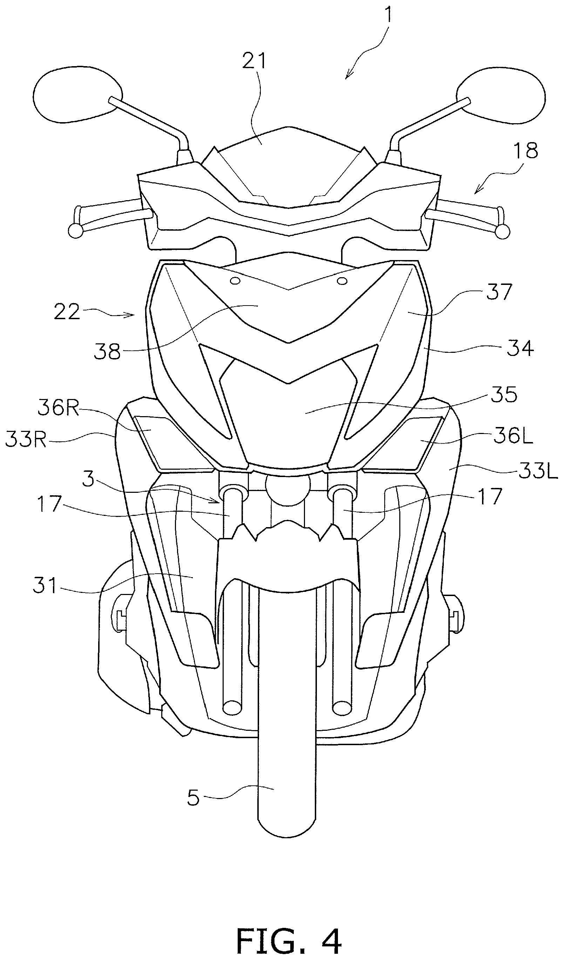

A straddled vehicle according to a preferred embodiment will be hereinafter explained with reference to drawings. FIG. 1 is a perspective view of a straddled vehicle 1 according to the preferred embodiment. FIG. 2 is a side view of the straddled vehicle 1. FIG. 3 is a top view of the straddled vehicle 1. FIG. 4 is a front view of the straddled vehicle 1. The straddled vehicle 1 according to the present preferred embodiment is a scooter-type vehicle. As shown in FIG. 2, the straddled vehicle 1 includes a vehicle body frame 2, a steering device 3, a vehicle body cover 4, a front wheel 5, a seat 6, a rear wheel 7 and a drive unit 8.

It should be noted that in the present specification, a back-and-forth direction of the straddled vehicle 1, an up-and-down direction of the straddled vehicle 1 and a right-and-left direction of the straddled vehicle 1 refer to a back-and-forth direction, an up-and-down direction and a right-and-left direction seen from a rider on the straddled vehicle 1. Additionally, the back-and-forth direction not only indicates directions arranged in parallel to the back-and-forth direction of the straddled vehicle 1, but also encompasses directions tilting within an angular range of ±45 degrees with respect to the back-and-forth direction of the straddled vehicle 1. In other words, a given direction closer to the back-and-forth direction than to the right-and-left direction and the up-and-down direction is classified as the back-and-forth direction.

Likewise, the up-and-down direction encompasses directions tilting within an angular range of ±45 degrees with respect to the up-and-down direction of the straddled vehicle 1. In other words, a given direction closer to the up-and-down direction than to the back-and-forth direction and the right-and-left direction is classified as the up-and-down direction.

Moreover, the right-and-left direction encompasses directions tilting within an angular range of ±45 degrees with respect to the right-and-left direction of the straddled vehicle 1. In other words, a given direction closer to the right-and-left direction than to the back-and-forth direction and the up-and-down direction is classified as the right-and-left direction.

In the present preferred embodiment, the term "vehicle width directionally inward" means directions approaching along the vehicle width direction to an axis that passes through the center of the vehicle in the vehicle width direction and extends in the back-and-forth direction. On the other hand, the term "vehicle width directionally outward" means directions arranged along the vehicle width direction in opposition to the directions meant by the term "vehicle width directionally inward". In other words, the term "vehicle width directionally outward" means directions separating from the axis that passes through the center of the vehicle in the vehicle width direction and extends in the back-and-forth direction.

The vehicle body frame 2 includes a head pipe 11, a down frame 12, a lower frame 13 and a seat frame 14. The down frame 12 extends downward from the head pipe 11. The lower frame 13 is connected to a lower portion of the down frame 12. The lower frame 13 extends backward from the lower portion of the down frame 12. The seat frame 14 is connected to the lower frame 13. The seat frame 14 extends backward and upward from a rear portion of the lower frame 13.

The steering device 3 includes a steering shaft 15, a bracket 16 and right and left suspensions 17. The steering shaft 15 is inserted into the head pipe 11. The steering shaft 15 is supported by the head pipe 11 and is thereby turnable right and left. The steering shaft 15 is connected at its lower portion to the right and left suspensions 17 through the bracket 16. The suspensions 17 support the front wheel 5 such that the front wheel 5 is rotatable. The steering shaft 15 is connected at its upper portion to a handle 18. The handle 18 is supported by the upper end portion of the steering shaft 15.

The vehicle body cover 4 includes a handle cover 21, a front cover assembly 22, a rear cover 23 and a lower cover 24. The handle cover 21 covers the front and rear sides of the handle 18. A meter panel 25 is attached to the upper surface of the handle cover 21. The meter panel 25 includes, for instance, a speed meter.

The front cover assembly 22 is disposed lower than the handle cover 21. The front cover assembly 22 is disposed in front of the head pipe 11. The front cover assembly 22 will be explained below in detail. The rear cover 23 covers the surroundings of the seat frame 14. The rear cover 23 is disposed under the seat 6.

The seat 6 is disposed backward of the head pipe 11. The seat 6 is disposed over the seat frame 14. The seat 6 is supported by the seat frame 14. The seat 6 is supported by the seat frame 14 through a stay (not shown in the drawings) and a storage (not shown in the drawings). Alternatively, the seat 6 may be directly supported by the seat frame 14.

The lower cover 24 is disposed between the front cover assembly 22 and the rear cover 23. The lower cover 24 covers the surroundings of the lower frame 13. The lower cover 24 includes a footboard 28 as portion of its upper surface. The footboard 28 is disposed lower than and forward of the seat 6. The footboard 28 is disposed over the lower frame 13. The footboard 28 is provided for allowing a rider to put his/her feet thereon. The footboard 28 has a flat shape. It should be noted that the shape of the footboard 28 is not limited to this. For example, the footboard 28 may be shaped such that its vehicle width directional middle portion protrudes in an upwardly convex shape.

The drive unit 8 is disposed under the seat 6. The drive unit 8 is pivotably supported by the vehicle body frame 2. The drive unit 8 includes, for instance, an engine and a transmission. The drive unit 8 supports the rear wheel 7 such that the rear wheel 7 is rotatable. The rear wheel 7 is supported by the vehicle body frame 2 through a rear suspension 27.

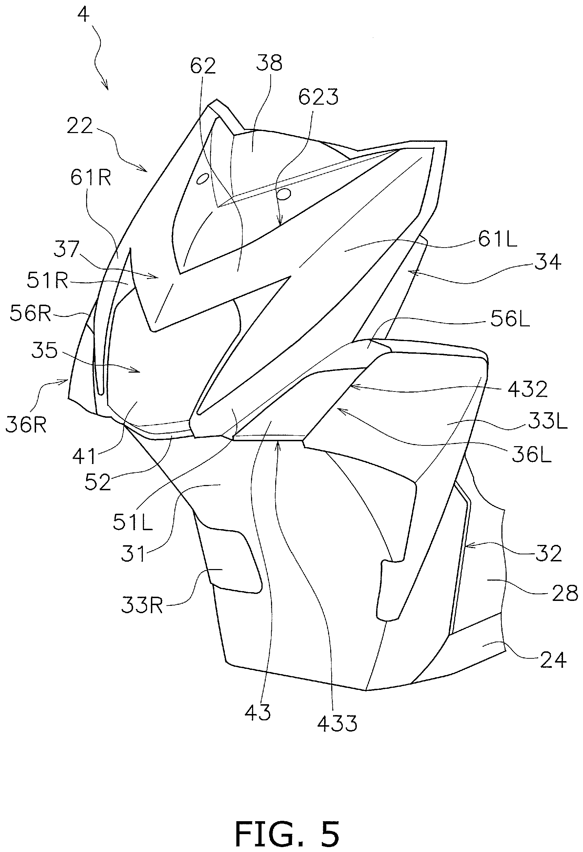

FIG. 5 is a perspective view of a front portion of the vehicle body cover 4. As shown in FIG. 5, the vehicle body cover 4 includes an inner cover 31 and a leg shield 32. The inner cover 31 is disposed under the front cover assembly 22. The inner cover 31 is made in a backwardly recessed shape. The front wheel 5 is disposed in front of the inner cover 31. The leg shield 32 is disposed behind the front cover assembly 22 and the inner cover 31. The leg shield 32 extends upward from a front portion of the footboard 28. The leg shield 32 covers the head pipe 11 and the down frame 12 from behind.

As shown in FIG. 4, the vehicle body cover 4 includes a left side cover 33L and a right side cover 33R. The left side cover 33L and the right side cover 33R are members provided separately from the front cover assembly 22. The left side cover 33L is disposed leftward of the leg shield 32 and the inner cover 31. The right side cover 33R is disposed rightward of the leg shield 32 and the inner cover 31.

The front cover assembly 22 includes a first cover member 34, a headlight 35, a left flasher light 36L, a right flasher light 36R, a second cover member 37 and an upper cover 38. The first cover member 34 is supported by the vehicle body frame 2. The first cover member 34 is attached to the leg shield 32. The first cover member 34 is made of an opaque material.

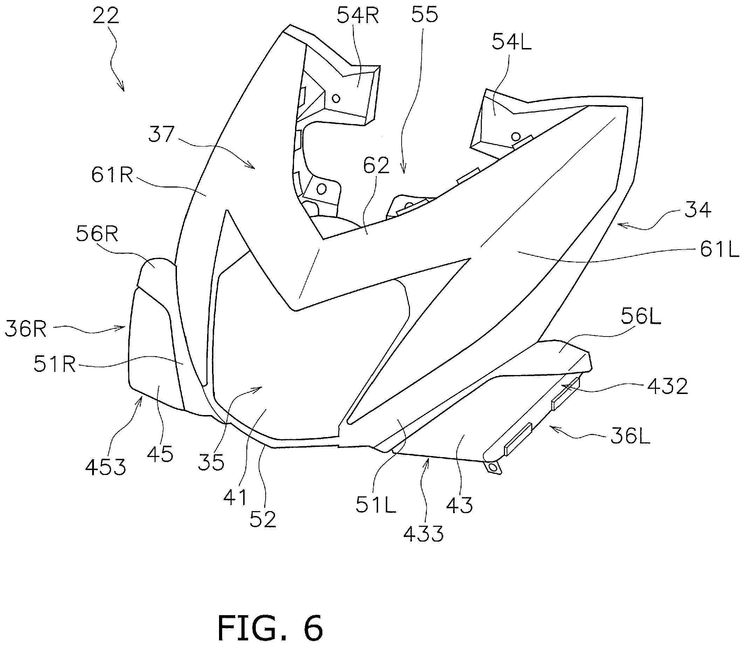

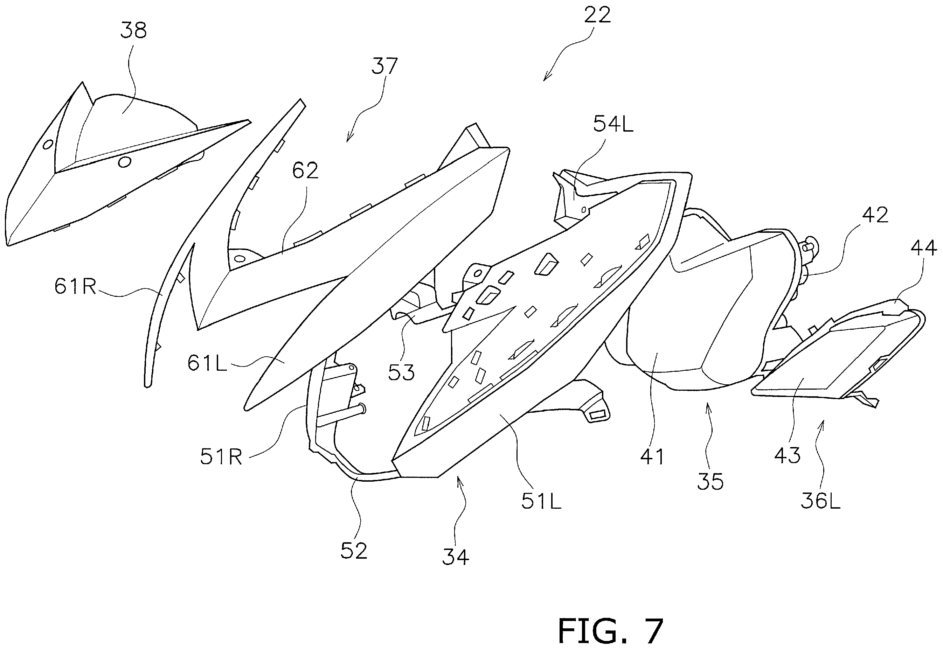

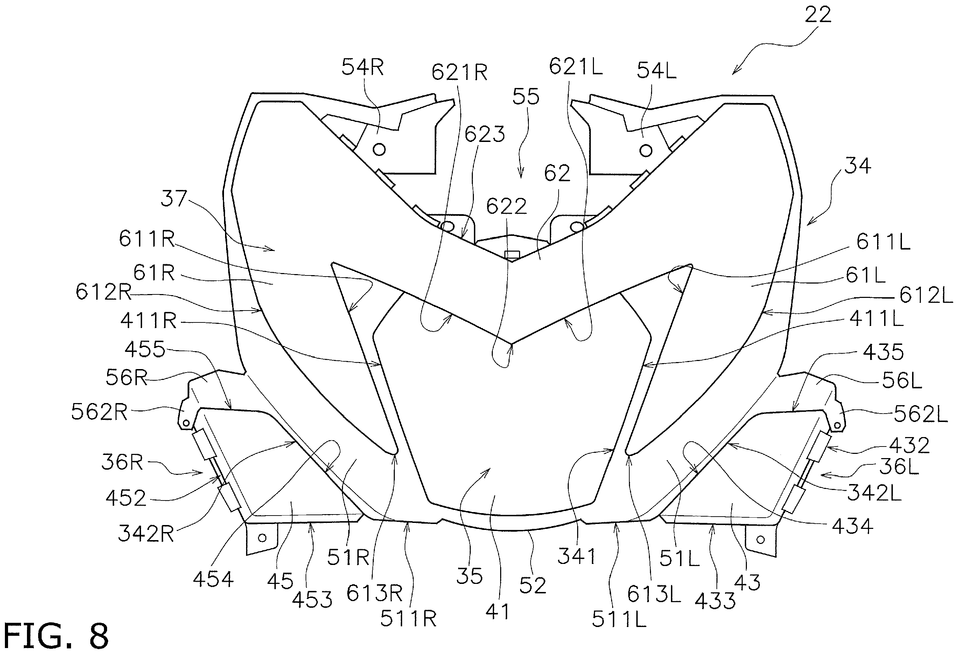

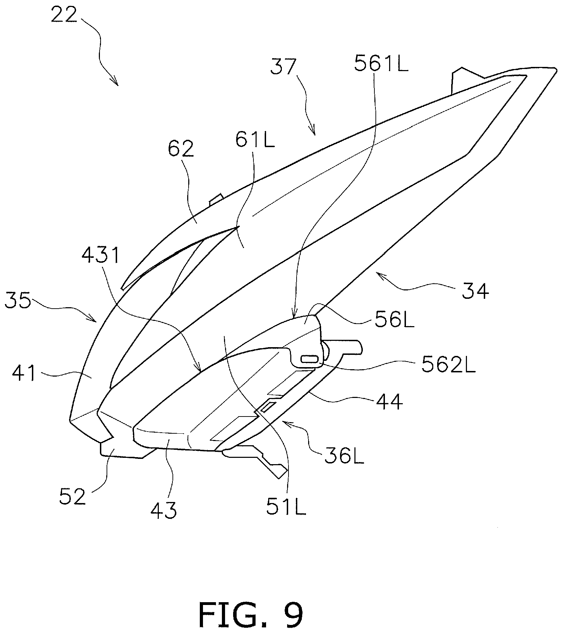

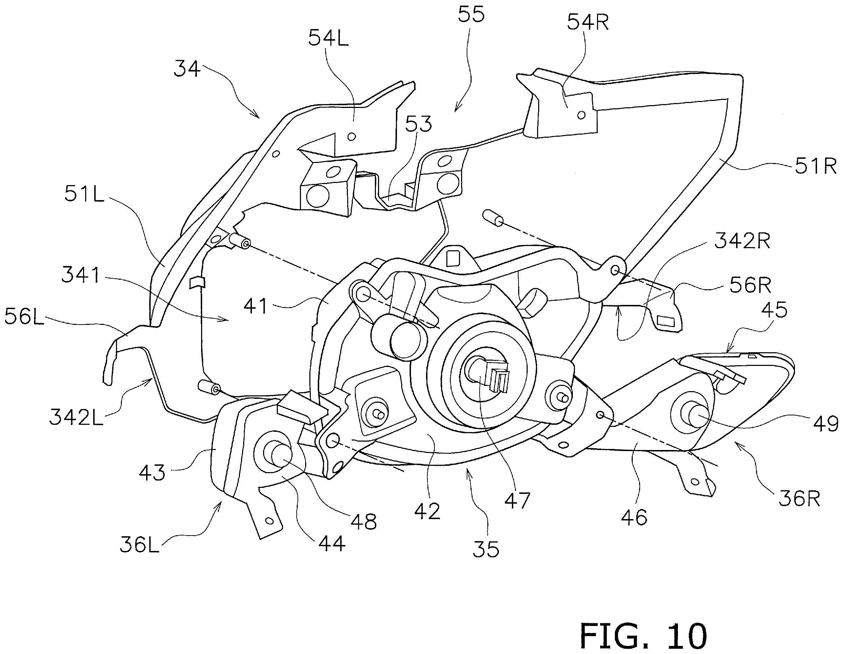

FIG. 6 is a perspective view of the front cover assembly 22. FIG. 7 is an exploded perspective view of the front cover assembly 22. FIG. 8 is a front view of the front cover assembly 22. FIG. 9 is a side view of the front cover assembly 22. FIG. 10 is an oblique rear view of the first cover member 34, the headlight 35, the left flasher light 36L and the right flasher light 36R. It should be noted that the upper cover 38 is not illustrated in FIGS. 6, 8 and 9.

As shown in FIG. 10, the headlight 35 includes a headlight lens 41 and a headlight body 42. The headlight lens 41 is attached to headlight body 42. The headlight lens 41 is made of a material with translucency. A headlight light source 47 is attached to the headlight body 42. For example, the headlight light source 47 is a bulb. Alternatively, the headlight light source 47 may be an LED.

The left flasher light 36L includes a left flasher lens 43 and a left flasher body 44. The left flasher lens 43 is attached to the left flasher body 44. The left flasher lens 43 is made of a material with translucency. A left flasher light source 48 is attached to the left flasher body 44. For example, the left flasher light source 48 is a bulb. Alternatively, the left flasher light source 48 may be an LED.

The right flasher light 36R includes a right flasher lens 45 and a right flasher body 46. The right flasher lens 45 is attached to the right flasher body 46. The right flasher lens 45 is made of a material with translucency. A right flasher light source 49 is attached to the right flasher body 46. For example, the right flasher light source 49 is a bulb. Alternatively, the right flasher light source 49 may be an LED.

The headlight 35, the left flasher light 36L and the right flasher light 36R are attached to the first cover member 34. The headlight 35, the left flasher light 36L and the right flasher light 36R are supported by the first cover member 34. The headlight lens 41, the left flasher lens 43 and the right flasher lens 45 are provided separately from each other.

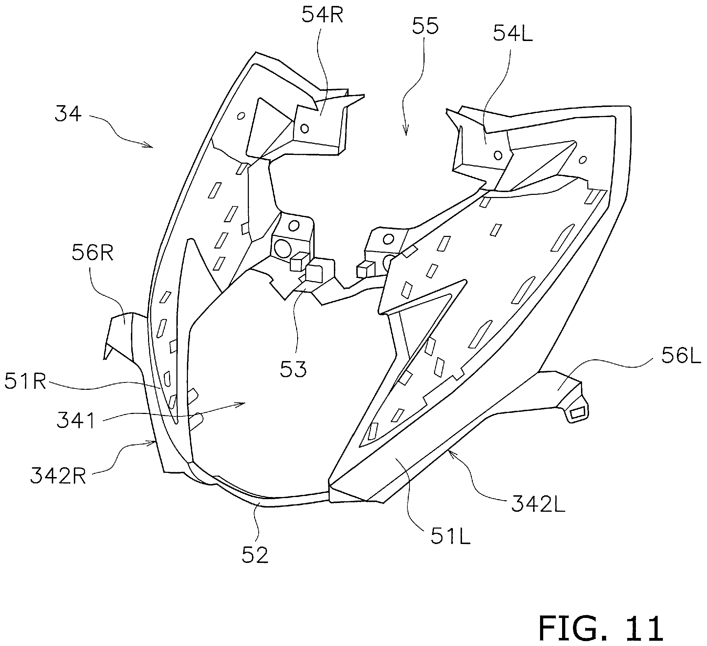

FIG. 11 is a perspective view of the first cover member 34. As shown in FIG. 11, the first cover member 34 includes a middle opening 341, a left cutout 342L, a right cutout 342R and a recess 55. In a vehicle front view, the middle opening 341 is located in the right-and-left directional middle of the first cover member 34. The left cutout 342L is provided on the left end portion of the first cover member 34. The right cutout 342R is provided on the right end portion of the first cover member 34. The recess 55 is recessed downward from the upper edge of the first cover member 34.

As shown in FIG. 8, the headlight lens 41 is disposed in the middle opening 341. The left flasher lens 43 is disposed in the left cutout 342L. The right flasher lens 45 is disposed in the right cutout 342R. In the vehicle front view, the left flasher lens 43 is disposed leftward of the headlight lens 41. In the vehicle front view, the right flasher lens 45 is disposed rightward of the headlight lens 41.

In the vehicle front view, the upper end of the left flasher lens 43 and that of the right flasher lens 45 are located lower than the upper end of the headlight lens 41, and are simultaneously located higher than the lower end of the headlight lens 41. In the vehicle front view, the lower end of the left flasher lens 43 and that of the right flasher lens 45 are located at approximately the same height as the lower end of the headlight lens 41.

As shown in FIG. 11, the first cover member 34 includes a first left cover portion 51L, a first right cover portion 51R, a first lower cover portion 52 and a coupling portion 53. As shown in FIG. 8, in the vehicle front view, the first left cover portion 51L is located between the headlight lens 41 and the left flasher lens 43. In the vehicle front view, the first right cover portion 51R is located between the headlight lens 41 and the right flasher lens 45. The recess 55 is located between the first left cover portion 51L and the first right cover portion 51R. The recess 55 is located over the coupling portion 53.

In the vehicle front view, the first lower cover portion 52 is located under the headlight lens 41. The lower end portion of the first left cover portion 51L and that of the first right cover portion 51R continue to the first lower cover portion 52. The coupling portion 53 is located over the headlight lens 41. The coupling portion 53 is located between the recess 55 and the middle opening 341. The first left cover portion 51L and the first right cover portion 51R are coupled through the coupling portion 53.

The first left cover portion 51L includes a first left fixation portion 54L. The first left fixation portion 54L is provided on an upper portion of the first left cover portion 51L. The first left fixation portion 54L is fixed to the leg shield 32 through a fastener member such as a bolt. The first right cover portion 51R includes a first right fixation portion 54R. The first right fixation portion 54R is provided on an upper portion of the first right cover portion 51R. The first right fixation portion 54R is fixed to the leg shield 32 through a fastener member such as a bolt.

In the vehicle front view, the first left cover portion 51L extends to a lower position than the lower end of a left edge 411L of the headlight lens 41. The headlight lens 41 and the left flasher lens 43 are divided through the first left cover portion 51L. In the vehicle front view, the first right cover portion 51R extends to a lower position than the lower end of a right edge 411R of the headlight lens 41. The headlight lens 41 and the right flasher lens 45 are divided through the first right cover portion 51R.

The first cover member 34 includes a left protruding portion 56L and a right protruding portion 56R. In the vehicle front view, the left protruding portion 56L protrudes leftward from the first left cover portion 51L. In the vehicle front view, the left protruding portion 56L is located over the left flasher lens 43. In the vehicle front view, the upper end of the left protruding portion 56L is located lower than that of the headlight lens 41. As shown in FIG. 9, in the vehicle side view, an upper surface 561L of the left protruding portion 56L continues to an upper surface 431 of the left flasher lens 43, and backwardly tilts up. The left protruding portion 56L includes a second left fixation portion 562L. The left side cover 33L is attached to the second left fixation portion 562L.

As shown in FIG. 8, in the vehicle front view, the right protruding portion 56R protrudes rightward from the first right cover portion 51R. In the vehicle front view, the right protruding portion 56R is located over the right flasher lens 45. In the vehicle front view, the upper end of the right protruding portion 56R is located lower than that of the headlight lens 41. The right protruding portion 56R is provided bilaterally symmetric to the left protruding portion 56L. Therefore in the vehicle side view, similarly to the left protruding portion 56L, the upper surface of the right protruding portion 56R continues to that of the right flasher lens 45, and backwardly tilts up. The right protruding portion 56R includes a second right fixation portion 562R. The right side cover 33R is attached to the second right fixation portion 562R.

In the vehicle front view, the first cover member 34 does not include a portion located leftward of a left edge 432 of the left flasher lens 43. The left edge 432 of the left flasher lens 43 is connected to the left side cover 33L. In the vehicle front view, the first cover member 34 does not include a portion located below a lower edge 433 of the left flasher lens 43. A right edge 434 of the left flasher lens 43 is connected to the first left cover portion 51L. An upper edge 435 of the left flasher lens 43 is connected to the left protruding portion 56L.

In the vehicle front view, the first cover member 34 does not include a portion located rightward of a right edge 452 of the right flasher lens 45. The right edge 452 of the right flasher lens 45 is connected to the right side cover 33R. In the vehicle front view, the first cover member 34 does not include a portion located below a lower edge 453 of the right flasher lens 45. A left edge 454 of the right flasher lens 45 is connected to the first right cover portion 51R. An upper edge 455 of the right flasher lens 45 is connected to the right protruding portion 56R.

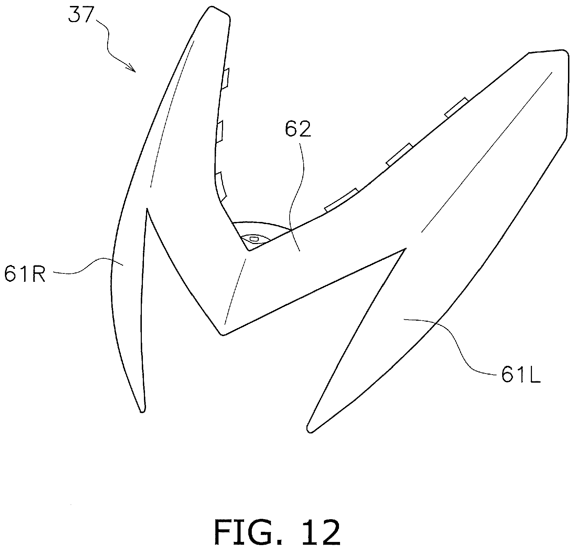

FIG. 12 is a perspective view of the second cover member 37. The second cover member 37 is provided separately from the first cover member 34, and is attached to the outer surface of the first cover member 34. The second cover member 37 includes a second left cover portion 61L, a second right cover portion 61R and a second middle cover portion 62.

As shown in FIG. 8, in the vehicle front view, at least portion of the second left cover portion 61L overlaps with the first cover member 34 in a region between the headlight lens 41 and the left flasher lens 43. When described in detail, the second left cover portion 61L is attached to the first left cover portion 51L and overlaps with portion of the first left cover portion 51L in the vehicle front view.

The second right cover portion 61R is provided bilaterally symmetric to the second left cover portion 61L. In the vehicle front view, at least portion of the second right cover portion 61R overlaps with the first cover member 34 in a region between the headlight lens 41 and the right flasher lens 45. When described in detail, the second right cover portion 61R is attached to the first right cover portion 51R and overlaps with portion of the first right cover portion 51R in the vehicle front view.

The second middle cover portion 62 is located between the second left cover portion 61L and the second right cover portion 61R. The second middle cover portion 62 couples the second left cover portion 61L and the second right cover portion 61R. In the vehicle front view, the second middle cover portion 62 overlaps with a portion located between the recess 55 and the middle opening 341 in the first cover member 34. In the vehicle front view, the second middle cover portion 62 overlaps with the coupling portion 53.

The second left cover portion 61L includes a left inner edge 611L and a left outer edge 612L. The left inner edge 611L and the left outer edge 612L compose a boundary between the second left cover portion 61L and the first cover member 34. In the vehicle front view, the left inner edge 611L and the left outer edge 612L are located between the headlight lens 41 and the left flasher lens 43. In the vehicle front view, the left inner edge 611L extends obliquely upward to the left.

The left inner edge 611L is disposed away leftward from the left edge 411L of the headlight lens 41. Therefore, in the vehicle front view, portion of the first left cover portion 51L is visible between the left inner edge 611L and the left edge 411L of the headlight lens 41. In the vehicle side view, the left inner edge 611L and the left outer edge 612L extend obliquely upward to the rear.

An upper portion of the left edge 411L of the headlight lens 41 extends obliquely upward to the right. A lower portion of the left edge 411L extends obliquely upward to the left. The lower portion of the left edge 411L tilts in the same direction as the left inner edge 611L.

In the vehicle front view, the left outer edge 612L extends obliquely upward to the left. In the vehicle front view, the left outer edge 612L is disposed away from the right edge 434 of the left flasher lens 43. Therefore, in the vehicle front view, portion of the first left cover portion 51L is visible between the left outer edge 612L and the right edge 434 of the left flasher lens 43.

In the vehicle front view, the left outer edge 612L and the left inner edge 611L continue at a lower end 613L of the second left cover portion 61L. The lower end 613L of the second left cover portion 61L is disposed away upward from a lower edge 511L of the first left cover portion 51L. Therefore, in the vehicle front view, portion of the first left cover portion 51L is visible between the lower end 613L of the second left cover portion 61L and the lower edge 511L of the first left cover portion 51L.

The second right cover portion 61R includes a right inner edge 611R and a right outer edge 612R. The right inner edge 611R and the right outer edge 612R compose a boundary between the second right cover portion 61R and the first cover member 34. In the vehicle front view, the right inner edge 611R extends obliquely upward to the right.

The right inner edge 611R is disposed away rightward from the right edge 411R of the headlight lens 41. Therefore, in the vehicle front view, portion of the first right cover portion 51R is visible between the right inner edge 611R and the right edge 411R of the headlight lens 41. In the vehicle side view, the right inner edge 611R and the right outer edge 612R extend obliquely upward to the rear.

An upper portion of the right edge 411R of the headlight lens 41 extends obliquely upward to the left. A lower portion of the right edge 411R extends obliquely upward to the right. The lower portion of the right edge 411R tilts in the same direction as the right inner edge 611R.

In the vehicle front view, the right outer edge 612R extends obliquely upward to the right. In the vehicle front view, the right outer edge 612R is disposed away from the left edge 454 of the right flasher lens 45. Therefore, in the vehicle front view, portion of the first right cover portion 51R is visible between the right outer edge 612R and the left edge 454 of the right flasher lens 45.

In the vehicle front view, the right outer edge 612R and the right inner edge 611R continue at a lower end 613R of the second right cover portion 61R. The lower end 613R of the second right cover portion 61R is disposed away upward from a lower edge 511R of the first right cover portion 51R. Therefore, in the vehicle front view, portion of the first right cover portion 51R is visible between the lower end 613R of the second right cover portion 61R and the lower edge 511R of the first right cover portion 51R.

The lower edge of the second middle cover portion 62 includes a middle left edge 621L and a middle right edge 621R. In the vehicle front view, the middle left edge 621L extends obliquely upward to the left. In the vehicle front view, the middle left edge 621L adjoins the headlight lens 41 and the first left cover portion 51L. The middle left edge 621L continues to the left inner edge 611L. In the vehicle front view, portion of the first left cover portion 51L is visible in a region enclosed by the middle left edge 621L, the left inner edge 611L and the upper portion of the left edge 411L.

The middle left edge 621L and the middle right edge 621R continues at a lower end 622 of the lower edge of the second middle cover portion 62. In the vehicle front view, the lower end 622 of the lower edge of the second middle cover portion 62 is located higher than the upper ends of the right and left flasher lens 44 and 43.

In the vehicle front view, the middle right edge 621R extends obliquely upward to the right. In the vehicle front view, the middle right edge 621R adjoins the headlight lens 41 and the first right cover portion 51R. The middle right edge 621R continues to the right inner edge 611R. In the vehicle front view, portion of the first right cover portion 51R is visible in a region enclosed by the middle right edge 621R, the right inner edge 611R and the upper portion of the right edge 411R.

An upper edge 623 of the second middle cover portion 62 has a downwardly recessed shape. In the vehicle front view, the upper edge 623 of the second middle cover portion 62 overlaps with the recess 55 of the first cover member 34. The upper cover 38 shown in FIG. 5 is attached to the upper edge 623 of the second middle cover portion 62. The upper cover 38 is provided separately from the first cover member 34. The upper cover 38 is disposed in the recess 55. The upper cover 38 covers the internal space of the first cover member 34 from above.

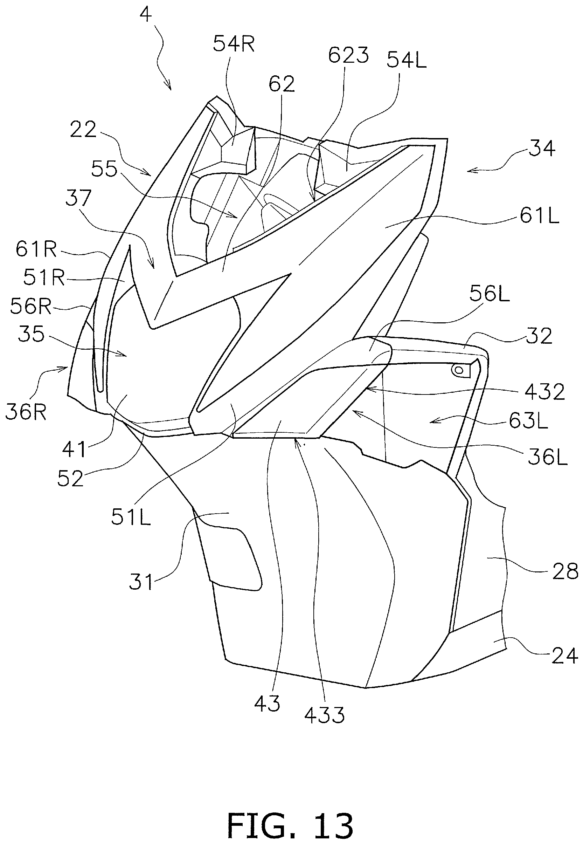

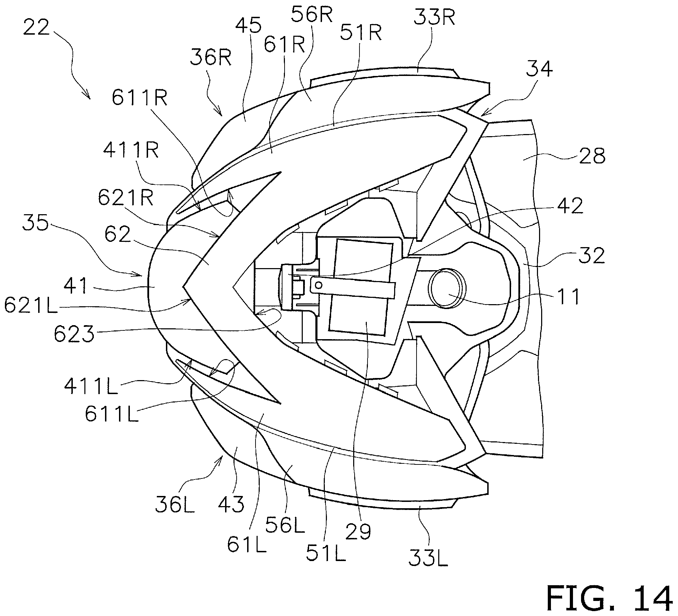

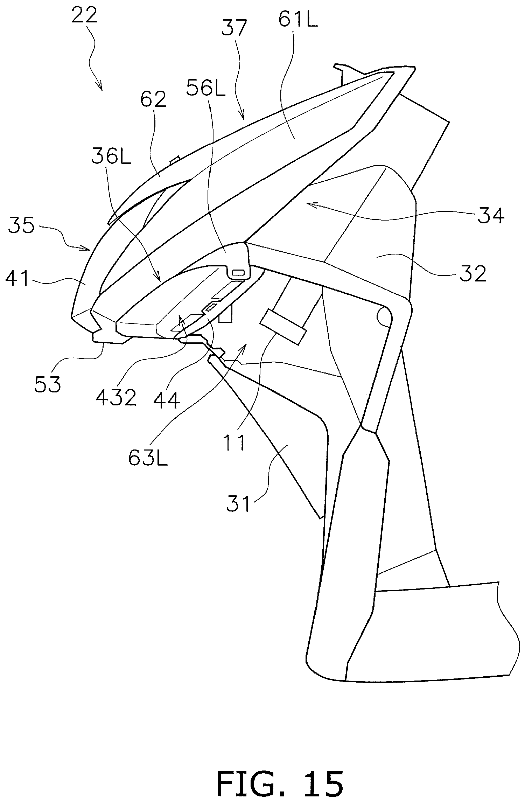

FIG. 13 is a perspective view of the front portion of the vehicle body cover 4 from which the upper cover 38 and the right and left side covers 33R and 33L are detached. FIG. 14 is a top view of the front portion of the vehicle body cover 4 from which the upper cover 38 and the right and left side covers 33R and 33L are detached. FIG. 15 is a left side view of the front portion of the vehicle body cover 4 from which the upper cover 38 and the right and left side covers 33R and 33L are detached.

As shown in FIG. 14, a battery 29 is disposed between the front cover assembly 22 and the head pipe 11. In the vehicle top view, the battery 29 is disposed behind the headlight 35. When the upper cover 38 is detached from the vehicle body cover 4, at least portion of the battery 29 is visible in the vehicle top view. When the upper cover 38 is detached from the vehicle body cover 4, at least portion of the headlight body 42 is visible in the vehicle top view.

As shown in FIGS. 13 and 15, the left flasher light 36L, the leg shield 32 and the inner cover 31 form a left opening 63L opened leftward. In the vehicle side view, the left opening 63L is disposed behind the left flasher light 36L. At least portion of the left flasher body 44 is visible through the left opening 63L. At least portion of the head pipe 11 is visible through the left opening 63L. The left side cover 33L is disposed on the left opening 63L. The left edge 432 of the left flasher lens 43 is directly attached to the left side cover 33L. The left opening 63L is covered with the left side cover 33L.

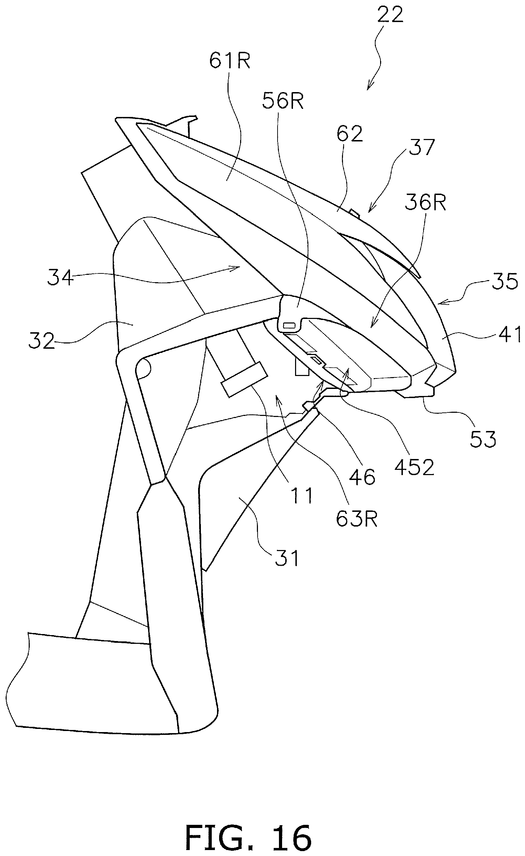

FIG. 16 is a right side view of the front portion of the vehicle body cover 4 from which the upper cover 38 and the right and left side covers 33R and 33L are detached. As shown in FIG. 16, the right flasher light 36R, the leg shield 32 and the inner cover 31 form a right opening 63R opened rightward. In the vehicle side view, the right opening 63R is disposed behind the right flasher light 36R. At least portion of the right flasher body 46 is visible through the right opening 63R. At least portion of the head pipe 11 is visible through the right opening 63R. The right side cover 33R is disposed on the right opening 63R. The right edge 452 of the right flasher lens 45 is directly attached to the right side cover 33R. The right opening 63R is covered with the right side cover 33R.

In the straddled vehicle 1 according to the present preferred embodiment explained above, the headlight 35 and the right and left flasher lights 36R and 36L are supported by the first cover member 34. Therefore, the right and left side covers 33R and 33L are not required to be provided with openings for attaching the right and left flasher lights 36R and 36L. Accordingly, degradation in stiffnesses of the right and left side covers 33R and 33L can be inhibited.

Additionally, the first cover member 34 is provided as an integrated member of covers requiring stiffnesses to support the headlight 35 and the right and left flasher lights 36R and 36L. Hence, stiffnesses required for the right and left side covers 33R and 33L can be lowered. Accordingly, deficiency in stiffnesses of the right and left side covers 33R and 33L can be inhibited.

The right and left side covers 33R and 33L are not required to support heavy objects. Hence, it is possible to lower stiffness required for the coupling portion 53 at which the first right and left cover portions 51R and 51L of the first cover member 34, to which the right and left side covers 33R and 33L are respectively attached, are coupled. Accordingly, deficiency in stiffness of the coupling portion 53 can be inhibited.

The headlight lens 41 and the left flasher lens 43 are divided through the first left cover portion 51L. Therefore, visibility of the left flasher lens 43 can be enhanced. The headlight lens 41 and the right flasher lens 45 are divided through the first right cover portion 51R. Therefore, visibility of the right flasher lens 45 can be enhanced.

The second left cover portion 61L overlaps with the first left cover portion 51L in a region between the headlight lens 41 and the left flasher lens 43. The second right cover portion 61R overlaps with the first right cover portion 51R in a region between the headlight lens 41 and the right flasher lens 45. Therefore, degradation in stiffnesses of the first right and left cover portions 51R and 51L can be enhanced even when visibility of the right flasher light 36R and that of the left flasher light 36L are respectively enhanced by increasing the width of the first right cover portion 51R and that of the first left cover portion 51L.

The right and left flasher lights 36R and 36L are supported by the first cover member 34. Hence, the right and left side covers 33R and 33L can be detached without detaching the right and left flasher lights 36R and 36L. Accordingly, maintenance performance can be enhanced.

Additionally, the left flasher light 36L composes portion of the left opening 63L, whereas the right flasher light 36R composes portion of the right opening 63R. Therefore, the left flasher light 36L is easily accessible through the left opening 63L, whereas the right flasher light 36R is easily accessible through the right opening 63R. Accordingly, maintenance performance of the right and left flasher lights 36R and 36L can be enhanced.

For example, replacement of components of the left flasher light 36L can be easily done by accessing the left flasher light 36L through the left opening 63L. This is also true of the right flasher light 36R.

Portion of the right opening 63R is formed by the right flasher light 36R, whereas portion of the left opening 63L is formed by the left flasher light 36L. Therefore, the left side cover 33L is directly connected to the left flasher light 36L, and any other component is not provided between the left side cover 33L and the left flasher light 36L. Likewise, any other component is not provided between the right side cover 33R and the right flasher light 36R. Therefore, width directional increase in the front cover assembly 22 can be inhibited.

In the vehicle front view, the first cover member 34 does not include a portion located under the lower edge 433 of the left flasher lens 43. In the vehicle front view, the first cover member 34 does not include a portion located under the lower edge 453 of the right flasher lens 45. Therefore, the first cover member 34 can be formed with a smaller size and the stiffness of the first cover member 34 can be more enhanced in comparison with a construction that the first cover member 34 includes a portion located under the lower edge 433 of the left flasher lens 43 and a portion located under the lower edge 453 of the right flasher lens 45.

The first cover member 34 includes the recess 55 downwardly recessed from the upper edge of the first cover member 34. Therefore, the interior of the front cover assembly 22 is accessible through the recess 55 by detaching the upper cover 38. Accordingly, maintenance performance can be enhanced. For example, maintenance of the battery 29 can be easily done through the recess 55. Additionally, adjustment of the optical axis of the headlight 35 can be easily done by accessing the headlight 35 through the recess 55. Alternatively, replacement of the components of the headlight 35 can be easily done.

In the vehicle front view, the second middle cover portion 62 overlaps with a portion located between the recess 55 and the middle opening 341 in the first cover member 34. Therefore, even when the first cover member 34 is provided with the recess 55, degradation in stiffness of the first cover member 34 can be inhibited.

In the vehicle front view, the boundary between the second left cover portion 61L and the first cover member 34 is located between the headlight lens 41 and the left flasher lens 43. On the other hand, in the vehicle front view, the boundary between the second right cover portion 61R and the first cover member 34 is located between the headlight lens 41 and the right flasher lens 45. Therefore, an uneven shape is formed between the first cover member 34 and the second left cover portion 61L. Likewise, an uneven shape is formed between the first cover member 34 and the second right cover portion 61R. Accordingly, the stiffness of the front cover assembly 22 can be further enhanced.

The left flasher lens 43, the right flasher lens 45 and the headlight lens 41 are separately provided. Therefore, attachment/detachment works can be separately performed for the left flasher lens 43, the right flasher lens 45 and the headlight lens 41. Hence, maintenance performance can be enhanced.

The lower end portion of the first left cover portion 51L and that of the first right cover portion 51R continue to the first lower cover portion 52. Therefore, the stiffness of the first cover member 34 can be more enhanced than that in a construction that the first left cover portion 51L and the first right cover portion 51R do not continue to the first lower cover portion 52.

One preferred embodiment of the present invention has been explained above. However, the present invention is not limited to the aforementioned preferred embodiment, and a variety of changes can be made without departing from the scope of the present invention.

The term "straddled vehicle" encompasses a motorcycle, an all-terrain vehicle and a snowmobile. The term "motorcycle" is not limited to the scooter-type vehicle according to the aforementioned preferred embodiment, and may encompasses other types of vehicle such as a moped.

The number of the front wheels is not limited to one, and alternatively, may be two or greater. The number of the rear wheels is not limited to one, and alternatively, may be two or greater.

The construction of the front cover assembly 22 may be changed from that described in the aforementioned preferred embodiment. For example, in the vehicle front view, only portion of the second left cover portion 61L may overlap with the first cover member 34 in the region between the headlight lens 41 and the left flasher lens 43. In the vehicle front view, only portion of the second right cover portion 61R may overlap with the first cover member 34 in the region between the headlight lens 41 and the right flasher lens 45.

The constituent members of the left opening 63L are not limited to only the left flasher light 36L, the leg shield 32 and the inner cover 31, and may additionally include another member. The constituent members of the right opening 63R are not limited to only the right flasher light 36R, the leg shield 32 and the inner cover 31, and may additionally include another member.

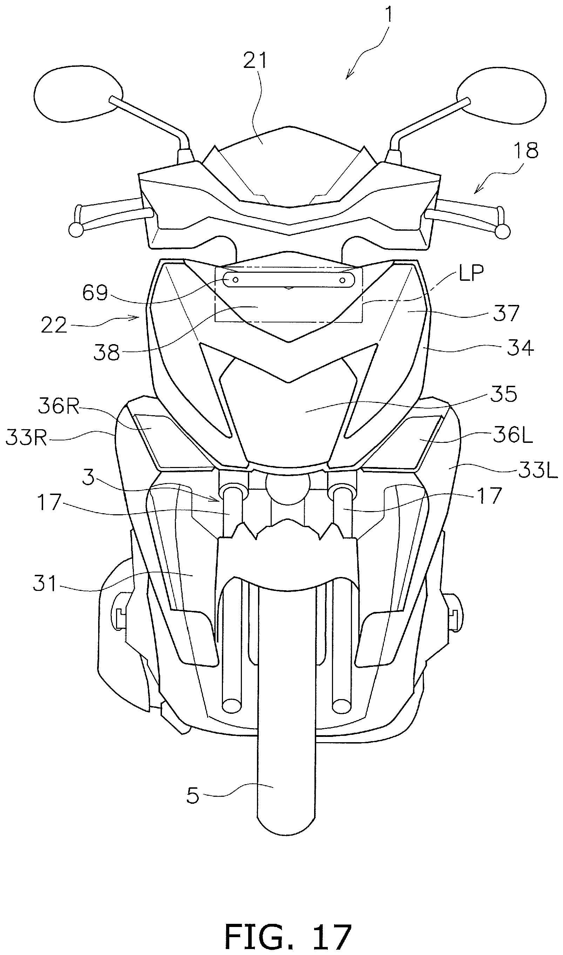

The first cover member 34 may not be provided with the recess 55. The upper cover 38 may be integrated with the first cover member 34 or the second cover member 37. As shown in FIG. 17, the upper cover 38 may include a mounter 69 for a license plate LP.

The shape or positional arrangement of the first cover member 34 may be changed. The shape or positional arrangement of the second cover member 37 may be changed. The shapes or positional arrangements of the right and left side covers 33R and 33L may be changed.

The component disposed inside the front cover assembly 22 is not limited to the battery 29, and may be another component.

The construction of the headlight 35 or the constructions of the right and left flasher lights 36R and 36L may be changed. For example, the left flasher lens 43, the right flasher lens 45 and the headlight lens 41 are not limited to components separately provided, and may be provided as an integrated component.

The terms and expressions, as used herein, are provided for the purpose of explanation, not of limitation to interpretation. It is to be recognized that there is no intention to exclude any equivalents of the features herein illustrated and described, and various modifications are possible within the scope claimed in the present invention. The present invention can be embodied in many different forms. The present disclosure should be considered to provide the principle embodiments of the present invention. Those embodiments are herein described with the understanding of not intending to limit the present invention to the embodiments herein described and/or illustrated. Thus, the present invention is not to be limited to those embodiments herein described. The present invention even encompasses all the embodiments including equivalent elements, modifications, deletions, combinations, improvements and/or changes, which could be recognized by a person skilled in the art based on the present disclosure. A limitation in a claim should be broadly interpreted based on terms used in the claim, and should not be limited to any of the embodiments described in the present specification or during prosecution of the present application.

## Claims

1. A straddled vehicle (1), comprising:
a vehicle body frame (2) including a head pipe (11);
a front cover assembly (22) disposed in front of the head pipe (11);
an inner cover (31) disposed under the front cover assembly (22);
a leg shield (32) disposed behind the front cover assembly (22) and the inner cover (31);
a left side cover (33L) provided separately from the front cover assembly (22); and
a right side cover (33R) provided separately from the front cover assembly (22), wherein
the front cover assembly (22) includes
a first cover member (34) supported by the vehicle body frame (2), the first cover member (34) including a middle opening (341) located in a right-and-left directional middle thereof in a vehicle front view,
a headlight (35) supported by the first cover member (34), the headlight (35) including a headlight lens (41) disposed in the middle opening (341),
a left flasher light (36L) supported by the first cover member (34), the left flasher light (36L) including a left flasher lens (43),
a right flasher light (36R) supported by the first cover member (34), the right flasher light (36R) including a right flasher lens (43), and
a second cover member (37) provided separately from the first cover member (34), the second cover member (37) being attached to an outer surface of the first cover member (34), and
the second cover member (37) includes
a second left cover portion (61L) at least partially overlapping with the first cover member (34) in a region between the headlight lens (41) and the left flasher lens (43) in the vehicle front view, and
a second right cover portion (61R) at least partially overlapping with the first cover member (34) in a region between the headlight lens (41) and the right flasher lens (43) in the vehicle front view,
**characterized in that**
the left flasher light (36L) is disposed leftward of the headlight lens (41) and on a left end portion of the first cover member (34) in the vehicle front view,
the right flasher light (36R) is disposed rightward of the headlight lens (41) and on a right end portion of the first cover member (34) in the vehicle front view,
an upper end of the left flasher lens (43) and an upper end of the right flasher lens (43) are located lower than an upper end of the headlight lens (41) and higher than a lower end of the headlight lens (41) in the vehicle front view,
at least the left flasher light (36L), the leg shield (32) and the inner cover (31) form a left opening (63L) opened leftward,
at least the right flasher light (36R), the leg shield (32) and the inner cover (31) form a right opening (63R) opened rightward,
the left side cover (33L) is disposed on the left opening (63L), and
the right side cover (33R) is disposed on the right opening (63R).

2. The straddled vehicle (1) according to claim 1, wherein
the first cover member (34) includes a recess (55) downwardly recessed from an upper edge of the first cover member (34), and
the second cover member (37) includes a second middle cover portion (62), the second middle cover portion (62) overlapping with at least a portion located between the recess (55) and the middle opening (341) in the first cover member (34) in the vehicle front view.

3. The straddled vehicle (1) according to claim 2, wherein
the front cover assembly (22) includes an upper cover (38), and
the upper cover (38) is provided separately from the first cover member (34) and the second cover member (37), the upper cover (38) being disposed to cover the recess (55).

4. The straddled vehicle (1) according to claim 3, wherein the upper cover (38) includes a mounter (69) for a license plate (LP).

5. The straddled vehicle (1) according to any of claims 1 to 4, wherein
a boundary between the second left cover portion (61L) and the first cover member (34) is located between the headlight lens (41) and the left flasher lens (43) in the vehicle front view, and
a boundary between the second right cover portion (61R) and the first cover member (34) is located between the headlight lens (41) and the right flasher lens (43) in the vehicle front view.

6. The straddled vehicle (1) according to any of claims 1 to 5, wherein
the first cover member (34) is partially visible between the second left cover portion (61L) and the headlight lens (41) in the vehicle front view, and
the first cover member (34) is partially visible between the second right cover portion (61R) and the headlight lens (41) in the vehicle front view.

7. The straddled vehicle (1) according to any of claims 1 to 6, wherein
the first cover member (34) is partially visible between the second left cover portion (61L) and the left flasher lens (43) in the vehicle front view, and
the first cover member (34) is partially visible between the second right cover portion (61R) and the right flasher lens (43) in the vehicle front view.

8. The straddled vehicle (1) according to any of claims 1 to 7, wherein
the boundary between the second left cover portion (61L) and the first cover member (34) extends obliquely upward to rear in a vehicle side view, and
the boundary between the second right cover portion (61R) and the first cover member (34) extends obliquely upward to rear in the vehicle side view.

9. The straddled vehicle (1) according to any of claims 1 to 8, further comprising:
a battery (29) disposed between the front cover assembly (22) and the head pipe (11).

10. The straddled vehicle (1) according to any of claims 1 to 9, wherein the left flasher lens (43), the right flasher lens (43) and the headlight lens (41) are provided separately from each other.

11. The straddled vehicle (1) according to any of claims 1 to 10, wherein
the first cover member (34) includes
a first left cover portion (51L) located between the headlight lens (41) and the left flasher lens (43) in the vehicle front view,
a first right cover portion (51R) located between the headlight lens (41) and the right flasher lens (43) in the vehicle front view, and
a first lower cover portion (52) located under the headlight lens (41) in the vehicle front view, and
a lower end portion of the first left cover portion (51L) and a lower end portion of the first right cover portion (51R) continue to the first lower cover portion (52).

12. The straddled vehicle (1) according to any of claims 1 to 11, wherein
the first cover member (34) does not include a portion located leftward of a left edge of the left flasher lens (43) in the vehicle front view, and
the first cover member (34) does not include a portion located rightward of a right edge of the right flasher lens (43) in the vehicle front view.

13. The straddled vehicle (1) according to any of claims 1 to 11, wherein
the left edge of the left flasher lens (43) is directly attached to the left side cover (33L), and
the right edge of the right flasher lens (43) is directly attached to the right side cover (33R).

14. The straddled vehicle (1) according to any of claims 1 to 13, wherein
the first cover member (34) does not include a portion located under a lower edge of the left flasher lens (43) in the vehicle front view, and
the first cover member (34) does not include a portion located under a lower edge of the right flasher lens (43) in the vehicle front view.

## Patentansprüche

1. Spreizsitz-Fahrzeug (1), das umfasst:
einen Fahrzeug-Karosserierahmen (2), der ein Steuerrohr (11) enthält;
eine Frontverkleidungs-Anordnung (22), die vor dem Steuerrohr (11) angeordnet ist;
eine Innenverkleidung (31), die unter der Frontverkleidungs-Anordnung (22) angeordnet ist;
einen Beinschutz (32), der hinter der Frontverkleidungs-Anordnung (22) und der Innenverkleidung (31) angeordnet ist;
eine linke Seitenverkleidung (33L), die separat von der Frontverkleidungs-Anordnung (22) vorhanden ist; sowie
eine rechte Seitenverkleidung (33R), die separat von der Frontverkleidungs-Anordnung (22) vorhanden ist; wobei
die Frontverkleidungs-Anordnung (22) enthält:
ein erstes Verkleidungs-Element (34), das von dem Fahrzeug-Karosserierahmen (2) getragen wird, wobei das erste Verkleidungs-Element (34) eine mittlere Öffnung (341) enthält, die, in einer Fahrzeug-Vorderansicht in einer Mitte in der Querrichtung angeordnet ist,
einen Scheinwerfer (35), der von dem ersten Verkleidungs-Element (34) getragen wird, wobei der Scheinwerfer (35) eine Scheinwerfer-Linse (41) enthält, die in der mittleren Öffnung (341) angeordnet ist,
ein linkes Blinklicht (36L), das von dem ersten Verkleidungs-Element (34) getragen wird, wobei das linke Blinklicht (36L) eine linke Blinklicht-Linse (43) enthält,
ein rechtes Blinklicht (36R), das von dem ersten Verkleidungs-Element (34) getragen wird, wobei das rechte Blinklicht (36R) eine rechte Blinklicht-Linse (43) enthält, sowie
ein zweites Verkleidungs-Element (37), das separat von dem ersten Verkleidungs-Element (34) vorhanden ist, wobei das zweite Verkleidungs-Element (37) an einer Außenfläche des ersten Verkleidungs-Elementes (34) angebracht ist, und
das zweite Verkleidungs-Element (37) enthält:
einen zweiten linken Verkleidungs-Abschnitt (61L), der sich in einem Bereich zwischen der Scheinwerfer-Linse (41) und der linken Blinklicht-Linse (43), in der Fahrzeug-Vorderansicht, wenigstens teilweise mit dem ersten Verkleidungs-Element (34) überlappt, sowie
einen zweiten rechten Verkleidungs-Abschnitt (61R), der sich in einem Bereich zwischen der Scheinwerfer-Linse (41) und der rechten Blinklicht-Linse (43) in der Fahrzeug-Vorderansicht wenigstens teilweise mit dem ersten Verkleidungs-Element (34) überlappt,
**dadurch gekennzeichnet, dass**
das linke Blinklicht (36L), in der Fahrzeug-Vorderansicht, links von der Scheinwerfer-Linse (41) und an einem linken Endabschnitt des ersten Verkleidungs-Elementes (34) angeordnet ist,
das rechte Blinklicht (36R), in der Fahrzeug-Vorderansicht, rechts von der Scheinwerfer-Linse (41) und an einem rechten Endabschnitt des ersten Verkleidungs-Elementes (34) angeordnet ist,
ein oberes Ende der linken Blinklicht-Linse (43) und ein oberes Ende der rechten Blinklicht-Linse (43), in der Fahrzeug-Vorderansicht, tiefer angeordnet sind als ein oberes Ende der Scheinwerfer-Linse (41) und höher als ein unteres Ende der Scheinwerfer-Linse (41),
wenigstens das linke Blinklicht (36L), der Beinschutz (32) und die Innenverkleidung (31) eine linke Öffnung (63L) bilden, die nach links geöffnet ist,
wenigstens das rechte Blinklicht (36R), der Beinschutz (32) und die Innenverkleidung (31) eine rechte Öffnung (63R) bilden, die nach rechts geöffnet ist,
die linke Seitenverkleidung (33L) an der linken Öffnung (63L) angeordnet ist, und
die rechte Seitenverkleidung (33R) an der rechten Öffnung (63R) angeordnet ist.

2. Spreizsitz-Fahrzeug (1) nach Anspruch 1, wobei
das erste Verkleidungs-Element (34) eine Vertiefung (55) enthält, die von einer Oberkante des ersten Verkleidungs-Elementes (34) nach unten vertieft ist, und
das zweite Verkleidungs-Element (37) einen zweiten mittleren Verkleidungs-Abschnitt (62) enthält, wobei sich der zweite mittlere Verkleidungs-Abschnitt (62), in der Fahrzeug-Vorderansicht mit wenigstens einem Abschnitt überlappt, der sich zwischen der Vertiefung (55) und der mittleren Öffnung (341) in dem ersten Verkleidungs-Element (34) befindet.

3. Spreizsitz-Fahrzeug (1) nach Anspruch 2, wobei:
die Frontverkleidungs-Anordnung (22) eine obere Verkleidung (38) enthält,
die obere Verkleidung (38) separat von dem ersten Verkleidungs-Element (34) und dem zweiten Verkleidungs-Element (37) vorhanden ist und die obere Verkleidung (38) so angeordnet ist, dass sie die Vertiefung (55) abdeckt.

4. Spreizsitz-Fahrzeug (1) nach Anspruch 3, wobei die obere Verkleidung (38) eine Anbringung (69) für ein Nummernschild (LP) enthält.

5. Spreizsitz-Fahrzeug (1) nach einem der Ansprüche 1 bis 4, wobei
eine Grenze zwischen dem zweiten linken Verkleidungs-Abschnitt (61L) und dem ersten Verkleidungs-Element (34), in der Fahrzeug-Vorderansicht, sich zwischen der Scheinwerfer-Linse (41) und der linken Blinklicht-Linse (43) befindet, und
eine Grenze zwischen dem zweiten rechten Verkleidungs-Abschnitt (61R) und dem ersten Verkleidungs-Element (34), in der Fahrzeug-Vorderansicht, sich zwischen der Scheinwerfer-Linse (41) und der rechten Blinklicht-Linse (43) befindet.

6. Spreizsitz-Fahrzeug (1) nach einem der Ansprüche 1 bis 5, wobei
das erste Verkleidungs-Element (34), in der Fahrzeug-Vorderansicht, zwischen dem zweiten linken Verkleidungs-Abschnitt (61L) und der Scheinwerfer-Linse (41) teilweise sichtbar ist, und
das erste Verkleidungs-Element (34), in der Fahrzeug-Vorderansicht, zwischen dem zweiten rechten Verkleidungs-Abschnitt (61R) und der Scheinwerfer-Linse (41) teilweise sichtbar ist.

7. Spreizsitz-Fahrzeug (1) nach einem der Ansprüche 1 bis 6, wobei
das erste Verkleidungs-Element (34), in der Fahrzeug-Vorderansicht, zwischen dem zweiten linken Verkleidungs-Abschnitt (61L) und der linken Blinklicht-Linse (43) teilweise sichtbar ist, und
das erste Verkleidungs-Element (34), in der Fahrzeug-Vorderansicht, zwischen dem zweiten rechten Verkleidungs-Abschnitt (61R) und der rechten Blinklicht-Linse (43) teilweise sichtbar ist.

8. Spreizsitz-Fahrzeug (1) nach einem der Ansprüche 1 bis 7, wobei
die Grenze zwischen dem zweiten linken Verkleidungs-Abschnitt (61L) und dem ersten Verkleidungs-Element (34), in einer Fahrzeug-Seitenansicht, schräg nach oben verläuft, und
die Grenze zwischen dem zweiten rechten Verkleidungs-Abschnitt (61R) und dem ersten Verkleidungs-Element (34), in der Fahrzeug-Seitenansicht, schräg nach oben verläuft.

9. Spreizsitz-Fahrzeug (1) nach einem der Ansprüche 1 bis 8, das des Weiteren umfasst:
eine Batterie (29), die zwischen der Frontverkleidungs-Anordnung (22) und dem Steuerrohr (11) angeordnet ist.

10. Spreizsitz-Fahrzeug nach einem der Ansprüche 1 bis 9, wobei die linke Blinklicht-Linse (43), die rechte Blinklicht-Linse (43) und die Scheinwerfer-Linse (41) separat voneinander vorhanden sind.

11. Spreizsitz-Fahrzeug (1) nach einem der Ansprüche 1 bis 10, wobei
das erste Verkleidungs-Element (34) enthält:
einen ersten linken Verkleidungs-Abschnitt (51L), der, in der Fahrzeug-Vorderansicht, sich zwischen der Scheinwerfer-Linse (41) und der linken Blinklicht-Linse (43) befindet,
einen ersten rechten Verkleidungs-Abschnitt (51R), der, in der Fahrzeug-Vorderansicht, sich zwischen der Scheinwerfer-Linse (41) und der rechten Blinklicht-Linse (43) befindet, sowie
einen ersten unteren Verkleidungs-Abschnitt (52), der, in der Fahrzeug-Vorderansicht, sich unter der Scheinwerfer-Linse (41) befindet, und
ein unterer Endabschnitt des ersten linken Verkleidungs-Abschnitts (51L) und ein unterer Endabschnitt des ersten rechten Verkleidungs-Abschnitts (51R) sich an den ersten unteren Verkleidungs-Abschnitt (52) anschließen.

12. Spreizsitz-Fahrzeug (1) nach einem der Ansprüche 1 bis 11, wobei
das erste Verkleidungs-Element (34) keinen Abschnitt enthält, der, in der Fahrzeug-Vorderansicht, sich links von einer linken Kante der linken Blinklicht-Linse (43) befindet, und
das erste Verkleidungs-Element (34) keinen Abschnitt enthält, der, in der Fahrzeug-Vorderansicht, sich rechts von einer rechten Kante der rechten Blinklicht-Linse (43) befindet.

13. Spreizsitz-Fahrzeug (1) nach einem der Ansprüche 1 bis 11, wobei
die linke Kante der linken Blinklicht-Linse (43) direkt an der linken Seitenverkleidung (33L) angebracht ist, und
die rechte Kante der rechten Blinklicht-Linse (43) direkt an der rechten Seitenverkleidung (33R) angebracht ist.

14. Spreizsitz-Fahrzeug (1) nach einem der Ansprüche 1 bis 13, wobei
das erste Verkleidungs-Element (34) keinen Abschnitt enthält, der, in der Fahrzeug-Vorderansicht, sich unter einer Unterkante der linken Blinklicht-Linse (43) befindet, und
das erste Verkleidungs-Element (34) keinen Abschnitt enthält, der, in der Fahrzeug-Vorderansicht, sich unter einer Unterkante der rechten Blinklicht-Linse (43) befindet.

## Revendications

1. Véhicule monté à califourchon (1) comprenant:
un châssis de carrosserie de véhicule (2) comprenant un tube de tête (11);
un ensemble capot avant (22) disposé devant le tube de tête (11);
un capot interne (31) disposé sous l'ensemble capot avant (22);
un protège-jambes (32) disposé derrière l'ensemble capot avant (22) et le capot interne (31};
un capot latéral gauche (33L) prévu séparément de l'ensemble capot avant (22); et
un capot latéral droit (33R) prévu séparément de l'ensemble capot avant (22),
dans lequel
l'ensemble capot avant (22) comprend
un premier élément de capot (34) supporté par le châssis de carrosserie de véhicule (2), le premier élément de capot (34) comprenant une ouverture médiane (341) située dans une partie centrale droite et gauche dans une vue avant du véhicule,
un phare (35) supporté par le premier élément de capot (34), le phare (35) comprenant une lentille de phare (41) disposée dans l'ouverture médiane (341),
une lampe clignotante gauche (36L) supportée par le premier élément capot (34), la lampe clignotante gauche (36L) comprenant une lentille clignotante gauche (43),
une lampe clignotante droite (36R) supportée par le premier élément capot (34), la lampe clignotante droite (36R) comprenant une lentille clignotante droite (43), et
un second élément de capot (37) prévu séparément du premier élément de capot (34), le second élément de capot (37) étant fixé à une surface externe du premier élément de capot (34), et
le second élément de capot (37) comprend
une seconde partie de capot gauche (61L) chevauchant au moins partiellement le premier élément de capot (34) dans une zone entre la lentille de phare (41) et la lentille de clignotant gauche (43) dans la vue de face du véhicule, et
une seconde partie de capot droite (61R) chevauchant au moins partiellement le premier élément de capot (34) dans une zone entre la lentille de phare (41) et la lentille de clignotant droite (43) dans la vue de face du véhicule,
**caractérisé en ce que**
le feu clignotant gauche (36L) est disposé à gauche de la lentille de phare (41) et sur une partie d'extrémité gauche du premier élément de capot (34) dans la vue de face du véhicule,
le feu clignotant droite (36R) est disposé à droite de la lentille de phare (41) et sur une partie d'extrémité droite du premier élément de capot (34) dans la vue de face du véhicule,
une extrémité supérieure de la lentille clignotante gauche (43) et une extrémité supérieure de la lentille clignotante droite (43) sont situées plus bas que l'extrémité supérieure de la lentille de phare (41) et plus haut que l'extrémité inférieure de la lentille de phare (41) dans la vue de face du véhicule,
au moins le feu clignotant gauche (36L), le protège-jambe (32) et le capot intérieur (31) forment une ouverture gauche (63L) ouverte vers la gauche,
au moins le feu clignotant droit (36R), le protège-jambe (32) et le capot intérieur (31) forment une ouverture droit (83R) ouverte vers la droite,
le capot latéral gauche (33L) est disposé sur l'ouverture gauche (63L) et le capot latéral droit (33R) est disposé sur l'ouverture droite (63R).

2. Véhicule monté à califourchon (1) selon la revendication 1, dans lequel le premier élément de capot (34) comprend un évidement (55) évidé vers le bas à partir d'un bord supérieur du premier élément de capot (34), et
le second élément de capot (37) comprend une seconde partie de capot médiane (82), la seconde partie de capot intermédiaire (62) recouvrant au moins une partie située entre l'évidement (55) et l'ouverture médiane (341) du premier élément de capot (34) dans la vue de face du véhicule.

3. Véhicule monté à califourchon (1) selon la revendication 2, dans lequel
l'ensemble capot avant (22) comprend un capot supérieur (38), et
le capot supérieur (38) est prévu séparément du premier élément de capot (34) et du second élément de capot (37), le capot supérieur (38) étant disposé pour recouvrir l'évidement (55).

4. Véhicule monté à califourchon (1) selon la revendication 3, dans lequel le capot supérieur (38) comprend un dispositif de montage (89) pour une plaque d'immatriculation (LP).

5. Véhicule monté à califourchon (1) selon l'une quelconque des revendications 1 à 4, dans lequel
une limite entre la seconde partie de capot gauche (61L) et le premier élément de capot (34) est située entre la lentille de phare (41) et la lentille de clignotant gauche (43) dans la vue avant du véhicule, et
une limite entre la seconde partie de capot droite (61R) et le premier élément de capot (34) est située entre la lentille de phare (41) et la lentille de clignotant droit (43) dans la vue avant du véhicule.

6. Véhicule monté à califourchon (1) selon l'une quelconque des revendications 1 à 5, dans lequel
le premier élément de capot (34) est partiellement visible entre la seconde partie de capot gauche (61L) et la lentille de phare (41) dans la vue de face du véhicule, et
le premier élément de capot (34) est partiellement visible entre la seconde partie de capot droite (61R) et la lentille de phare (41) dans la vue de face du véhicule.

7. Véhicule monté à califourchon (1) selon l'une quelconque des revendications 1 à 6, dans lequel
le premier élément de capot (34) est partiellement visible entre la seconde partie de capot gauche (61L) et la lentille de phare (43) dans la vue de face du véhicule, et
le premier élément de capot (34) est partiellement visible entre la seconde partie de capot droite (61R) et la lentille de phare (41) dans la vue de face du véhicule.

8. Véhicule monté à califourchon (1) selon l'une quelconque des revendications 1 à 7, dans lequel
la limite entre la seconde partie de capot gauche (61L) et le premier élément de capot (34) s'étend obliquement vers le haut vers l'arrière dans une vue de côté du véhicule, et
la limite entre la seconde partie de capot droite (61R) et le premier élément de capot (34) s'étend obliquement vers le haut vers l'arrière dans une vue de côté du véhicule.

9. Véhicule monté à califourchon (1) selon l'une quelconque des revendications 1 à 8, dans lequel
une batterie (29) disposée entre l'ensemble capot avant (22) et le tube de direction (11).

10. Véhicule monté à califourchon (1) selon l'une quelconque des revendications 1 à 9, dans lequel la lentille clignotante gauche (43), la lentille clignotante droite (43) et la lentille de phare (41) sont prévues séparément l'une de l'autre.

11. Véhicule monté à califourchon (1) selon l'une quelconque des revendications 1 à 10, dans lequel le premier élément de capot (34) comprend
une première partie de capot gauche (51L) située entre la lentille de phare (41) et la lentille de clignotant gauche (43) dans la vue de face du véhicule,
une première partie de capot droite (51R) située entre la lentille de phare (41) et la lentille de clignotant droite (43) dans la vue de face du véhicule, et
une première partie de capot inférieure (52) située sous la lentille de phare (41) dans la vue de face du véhicule, et
une partie d'extrémité inférieure de la première partie de capot gauche (51L) et une partie d'extrémité inférieure de la première partie de capot droite (51R) continuent jusqu'à la première partie de capot inférieure (52).

12. Véhicule monté à califourchon (1) selon l'une quelconque des revendications 1 à 11, dans lequel
le premier élément de capot (34) ne comprend pas une partie située à gauche d'un bord gauche de la lentille de clignotant gauche (43) dans la vue de face du véhicule, et
le premier élément de capot (34) ne comprend pas une partie située à droite d'un bord droit de la lentille de clignotant droite (43) dans la vue de face du véhicule.

13. Véhicule monté à califourchon (1) selon l'une quelconque des revendications 1 à 11, dans lequel
le bord gauche de la lentille clignotante gauche (43) est directement attaché au capot latéral gauche (33L), et
le bord droite de la lentille clignotante droite (43) est directement attaché au capot latéral droit (33R).

14. Véhicule monté à califourchon (1) selon l'une quelconque des revendications 1 à 13, dans lequel
le premier élément de capot (34) ne comprend pas une partie située sous un bord inférieur de la lentille clignotante gauche (43) dans la vue de face du véhicule, et
le premier élément de capot (34) ne comprend pas une partie située sous un bord inférieur de la lentille clignotante droite (43) dans la vue de face du véhicule.
